# EUROPÄISCHE PATENTSCHRIFT

(11) **EP 3 886 558 B1**
(45) Veröffentlichungstag und Bekanntmachung des Hinweises auf die Patenterteilung: **22.05.2024**
(21) Anmeldenummer: 19805227.6
(22) Anmeldetag: 14.11.2019
(51) Int. Cl.: A01C 17/00

(54) **VERFAHREN ZUM PLANEN DER AUSBRINGUNG EINER STREUGUTMISCHUNG**
METHOD OF PLANNING THE DISTRIBUTION OF BLENDED SPREADING MATERIAL
PROCÉDÉ DE PLANIFICATION DE LA DISTRIBUTION D'UN MÉLANGE DE MATÉRIAU À ÉPANDRE

(30) Priorität: 26.11.2018 DE 102018129714
(43) Veröffentlichungstag der Anmeldung: 06.10.2021
(73) Patentinhaber: Amazonen-Werke H. Dreyer SE & Co. KG, 49205 Hasbergen (DE)
(72) Erfinder: STRÖBEL-FRÖSCHLE, Markus, 49124 Georgsmarienhütte (DE); SCHEUFLER, Bernd, 49205 Hasbergen (DE)
(86) Internationale Anmeldenummer: PCT/EP2019/081264
(87) Internationale Veröffentlichungsnummer: WO 2020/109009

(56) Entgegenhaltungen:
- EP-A1- 2 957 161
- EP-A1- 3 017 681
- EP-A1- 3 087 817

## Beschreibung

Die Erfindung betrifft ein Verfahren zum Planen der Ausbringung einer Streugutmischung nach dem Oberbegriff des Patentanspruchs 1. Streugutmischungen mit einer Mehrzahl von Einzelkomponenten, wie beispielsweise Düngermischungen, welche mehrere Einzeldünger beinhalten, erfreuen sich zunehmender Beliebtheit, da durch die gleichzeitige Ausbringung mehrerer Einzelkomponenten der für die Streugutausbringung notwendige Zeit- und Personalaufwand erheblich reduziert werden kann. In der Praxis hat sich jedoch gezeigt, dass die gemeinsame Ausbringbarkeit von Einzelkomponenten einer Streugutmischung nicht immer gegeben ist, sodass beim Ausbringen entsprechender Streugutmischungen Fehlausbringungen einzelner oder sämtlicher Komponenten der Streugutmischungen häufig nicht zu vermeiden sind. Aus den Fehlausbringungen resultiert beispielsweise eine ungleichmäßige Verteilung einzelner oder sämtlicher Einzelkomponenten der Streugutmischung auf der landwirtschaftlichen Nutzfläche.

Im Stand der Technik ist bisher kein Verfahren bekannt, mit welchem sich die Ausbringung einer Streugutmischung mit einer landwirtschaftlichen Streumaschine zuverlässig planen lässt. Die EP 3 087 817 A1 offenbart ein Verfahren zur Überprüfung der Eignung von auszustreuenden granulierten Mineraldünger einer Mineraldüngersorte und/oder auszustreuender Düngermischungen verschiedener Mineraldüngersorten und/oder aus mehreren Mineraldüngersorten zusammengestellten Düngervarianten zum Ausbringen mit einem Zentrifugaldüngerstreuer mit angetriebenen Verteilelementen.

Die der Erfindung zugrundeliegende Aufgabe besteht somit darin, die gemeinsame Ausbringbarkeit von Einzelkomponenten einer Streugutmischung zum Planen eines Ausbringvorgangs besser als bisher möglich beurteilen zu können.

Die Aufgabe wird gelöst durch ein Verfahren der eingangs genannten Art, wobei zunächst komponentenbezogene Einstellparameter für die landwirtschaftliche

Streumaschine für einen geplanten Streuvorgang für mehrere oder sämtliche Einzelkomponenten der Streugutmischung ermittelt werden. Anschließend erfolgt eine Bewertung der gemeinsamen Ausbringbarkeit der Einzelkomponenten der Streugutmischung auf Grundlage der ermittelten komponentenbezogenen Einstellparameter durch eine Berechnungseinrichtung.

Die Erfindung macht sich die Erkenntnis zunutze, dass komponentenbezogene Einstellparameter für die landwirtschaftliche Streumaschine für die jeweiligen Einzelkomponenten der Streugutmischung ohne Weiteres ermittelbar sind, wobei durch ein Vergleichen der komponentenbezogenen Einstellparameter für die landwirtschaftliche Streumaschine der Einzelkomponenten die gemeinsame Ausbringbarkeit der Einzelkomponenten der Streugutmischung zuverlässig beurteilt werden kann.

Nach dem erfindungsgemäßen Verfahren umfasst das Bewerten der gemeinsamen Ausbringbarkeit der Einzelkomponenten der Streugutmischung das Untersuchen der Existenz von einem oder mehreren Kompromiss-Einstellparametern, bei deren Einstellung an der landwirtschaftlichen Streumaschine die Querverteilungen mehrerer oder sämtlicher Einzelkomponenten der Streugutmischung innerhalb eines Toleranzbereichs liegen.

Der eine oder die mehreren Kompromiss-Einstellparameter können einen Kompromiss-Abwurfwinkel, einen Kompromiss-Einstellwert für den Aufgabepunkt der Streugutmischung auf die Streuscheibe, eine Kompromiss-Wurfweite und/oder eine Kompromiss-Streuscheibendrehzahl betreffen. Ferner kann die eine oder können die mehreren Kompromiss-Einstellparameter eine Kompromiss-Öffnungsgröße, -Öffnungsform und/oder -Öffnungsposition einer Streugut-Zuführöffnung der landwirtschaftlichen Streumaschine betreffen. Darüber hinaus kann der eine oder können die mehreren Kompromiss-Einstellparameter eine Kompromiss-Schaufelposition, -Schaufelneigung, -Schaufelausrichtung und/oder -Schaufellänge einer oder mehrerer Wurfschaufeln der Streuscheibe der landwirtschaftlichen Streumaschine betreffen, wenn die Ausbringung der Streugutmischung über Streuscheiben mit Wurfschaufeln erfolgen soll. Außerdem kann die eine oder können die mehreren Kompromiss-Einstellparameter eine Kompromiss-Rutschenneigung, -Rutschenausrichtung und/oder -Rutschenposition betreffen, wenn zur Ausbringung der Streugutmischung das Streugut über eine Zuführrutsche des landwirtschaftlichen Streugeräts geleitet werden soll. Außerdem kann der eine oder können die mehreren Kompromiss-Einstellparameter einen Kompromiss-Streuscheibentyp und/oder eine Kompromiss-Streuscheibengeometrie und/oder einen Kompromiss-Wurfschaufeltyp betreffen.

Weiterhin umfasst das Ausgeben des Ergebnisses der Bewertung der gemeinsamen Ausbringbarkeit der Einzelkomponenten der Streugutmischung erfindungsgemäß das Ausgeben des einen oder der mehreren Kompromiss-Einstellparameter als Einstellempfehlungen für die landwirtschaftliche Streumaschine. Die ausgegebenen Kompromiss-Einstellparameter können dann durch den die Streugutausbringung planenden Benutzer an der landwirtschaftlichen Streumaschine eingestellt werden. Alternativ können die Kompromiss-Einstellparameter auch selbsttätig von der landwirtschaftlichen Streumaschine eingestellt werden.

Die Berechnungseinrichtung ist vorzugsweise eine Datenverarbeitungseinrichtung. Das Verfahren kann zumindest teilweise oder vollständig ein computerimplementiertes Verfahren sein.

Die Streugutmischung kann eine Düngermischung sein, wobei die Einzelkomponenten der Streugutmischung in diesem Fall vorzugsweise Einzeldünger sind. Die komponentenbezogenen Einstellparameter für die landwirtschaftliche Streumaschine betreffen vorzugsweise komponentenbezogene Abwurfwinkel, komponentenbezogene Einstellwerte für den Aufgabepunkt der Einzelkomponente auf die Streuscheibe, komponentenbezogene Wurfweiten und/oder komponentenbezogene Streuscheibendrehzahlen für den geplanten Streuvorgang. Ferner können die komponentenbezogenen Einstellparameter für die landwirtschaftliche Streumaschine komponentenbezogene Öffnungsgrößen, Öffnungsformen und/oder Öffnungspositionen einer Streugut-Zuführöffnung der landwirtschaftlichen Streumaschine für den geplanten Streuvorgang betreffen. Alternativ oder zusätzlich können die komponentenbezogenen Einstellparameter für die landwirtschaftliche Streumaschine komponentenbezogene Schaufelpositionen, Schaufelneigungen, Schaufelausrichtungen und/oder Schaufellängen einer oder mehrerer Wurfschaufeln der Streuscheibe der landwirtschaftlichen Streumaschine für den geplanten Streuvorgang betreffen, wenn die Ausbringung über Streuscheiben mit Wurfschaufeln erfolgen soll. Darüber hinaus können die komponentenbezogenen Einstellparameter für die landwirtschaftliche Streumaschine komponentenbezogene Rutschenneigungen, Rutschenausrichtungen und/oder Rutschenpositionen für den geplanten Streuvorgang betreffen, wenn zur Ausbringung des Streuguts das Streugut über eine Zuführrutsche des landwirtschaftlichen Streugeräts geleitet werden soll.

Alternativ oder zusätzlich können die komponentenbezogenen Einstellparameter für die landwirtschaftliche Streumaschine komponentenbezogene Streuscheibentypen, komponentenbezogene Streuscheiben-Geometrien und/oder komponentenbezogene Wurfschaufeltypen betreffen. Der geplante Streuvorgang gibt vorzugsweise die einzuhaltende Arbeitsbreite vor.

In einer bevorzugten Ausführungsform des erfindungsgemäßen Verfahrens erfolgt ein Ausgeben eines Ergebnisses der Bewertung der gemeinsamen Ausbringbarkeit der Einzelkomponenten der Streugutmischung über ein elektronisches Gerät. Das elektronische Gerät kann beispielsweise ein mobiles Endgerät, ein Personal Computer oder eine Eingabe- und/oder Ausgabeeinrichtung der landwirtschaftlichen Streumaschine sein. Das Ausgeben des Ergebnisses der Bewertung der gemeinsamen Ausbringbarkeit der Einzelkomponenten der Streugutmischung erfolgt vorzugsweise über ein optisches Anzeigen des Ergebnisses.

Darüber hinaus ist ein erfindungsgemäßes Verfahren vorteilhaft, bei welchem einem Benutzer über ein elektronisches Gerät eine Möglichkeit bereitgestellt wird, mittels welcher die Einzelkomponenten und vorzugsweise das Mischungsverhältnis der Einzelkomponenten definierbar sind. Das Ausgeben des Ergebnisses der Bewertung der gemeinsamen Ausbringbarkeit der Einzelkomponenten der Streugutmischung erfolgt vorzugsweise über das die Eingabemöglichkeit bereitstellende elektronische Gerät. Die Möglichkeit, mittels welcher die Einzelkomponenten und vorzugsweise das Mischungsverhältnis der Einzelkomponenten definierbar ist, kann eine Eingabemöglichkeit sein, welche die manuelle Definition der Einzelkomponenten und vorzugsweise deren Mischungsverhältnis durch den Benutzer erlaubt. Die Definition der Einzelkomponenten und vorzugsweise deren Mischungsverhältnis kann auch über ein Einlesen eines oder mehrerer maschinenlesbarer Codes, wie etwa QR-Codes, erfolgen. Die Definition der Einzelkomponenten und vorzugsweise deren Mischungsverhältnis kann auch über Funknachrichten erfolgen. Das elektronische Gerät kann ein mobiles Endgerät, ein Personal Computer oder eine Eingabe- und/oder Ausgabeeinrichtung der landwirtschaftlichen Streumaschine sein. Vorzugsweise wird beim Bewerten der gemeinsamen Ausbringbarkeit der Einzelkomponenten der Streugutmischung auch deren Mischungsverhältnis berücksichtigt.

In einer weiteren Ausführungsform des erfindungsgemäßen Verfahrens erfolgt das Erfassen der Einzelkomponenten der Streugutmischung und/oder das Ermitteln der komponentenbezogenen Einstellparameter durch die Berechnungseinrichtung. Die Berechnungseinrichtung ist vorzugsweise Bestandteil eines zentralen Computersystems, des elektronischen Geräts oder der landwirtschaftlichen Streumaschine. Zum Ermitteln der komponentenbezogenen Einstellparameter werden vorzugsweise komponentenbezogene Streudaten von einer Datenbank, insbesondere von einer Streudatenbank, abgerufen. Der Abruf der komponentenbezogenen Streudaten kann über die Berechnungseinrichtung erfolgen. Auf der Datenbankbank können komponentenbezogene Stoffeigenschaften, komponentenbezogene Flug- und/oder Streueigenschaften und/oder komponentenbezogene Einstellparameter der Einzelkomponenten der Streugutmischung gespeichert sein. Das Abrufen der komponentenbezogenen Streudaten von der Datenbank kann entsprechend das Abrufen komponentenbezogener Stoffeigenschaften, komponentenbezogener Flug- und/oder Streueigenschaften und/oder komponentenbezogener Einstellparameter der Einzelkomponenten der Streugutmischung umfassen.

Das erfindungsgemäße Verfahren wird ferner dadurch vorteilhaft weitergebildet, dass das Bewerten der gemeinsamen Ausbringbarkeit der Einzelkomponenten der Streugutmischung das Ermitteln von komponentenbezogenen Querverteilungen für mehrere oder sämtliche Einzelkomponenten der Streugutmischung unter Annahme der jeweiligen komponentenbezogenen Einstellparameter umfasst. Alternativ oder zusätzlich umfasst das Bewerten der gemeinsamen Ausbringbarkeit der Einzelkomponenten der Streugutmischung das Ermitteln von komponentenbezogenen Querverteilungen für mehrere oder sämtliche Einzelkomponenten der Streugutmischung unter Annahme unterschiedlicher Einstellparameter innerhalb des Spektrums der ermittelten komponentenbezogenen Einstellparameter der Einzelkomponenten der Streugutmischung. Wenn komponentenbezogene Querverteilungen für mehrere oder sämtliche Einzelkomponenten der Streugutmischung unter Annahme unterschiedlicher Einstellparameter innerhalb des Spektrums der ermittelten komponentenbezogenen Einstellparameter der Einzelkomponenten der Streugutmischung ermittelt werden, kann hierdurch geprüft werden, ob möglicherweise Einstellparameter, welche von den komponentenbezogenen Einstellparametern abweichen, zu einem zufriedenstellenden Ausbringergebnis für mehrere oder sämtliche Einzelkomponenten der Streugutmischung führen.

Ferner ist ein erfindungsgemäßes Verfahren bevorzugt, bei welchem das Bewerten der gemeinsamen Ausbringbarkeit der Einzelkomponenten der Streugutmischung das Untersuchen der Existenz einer Streukompatibilität umfasst, nach welcher einzelne oder sämtliche miteinander kompatible Einzelkomponenten der Streugutmischung mit der landwirtschaftlichen Streumaschine derart gemeinsam ausbringbar sind, dass deren Querverteilungen innerhalb eines Toleranzbereichs liegen. Der Toleranzbereich kann beispielsweise eine tolerierte Ungleichmäßigkeit im Hinblick auf die Querverteilungen sein, sodass miteinander kompatible Einzelkomponenten derart gemeinsam ausbringbar sind, dass sich eine tolerierbare Ungleichmäßigkeit der Einzelkomponenten auf der landwirtschaftlichen Nutzfläche ergibt. Ferner kann das Bewerten der gemeinsamen Ausbringbarkeit der Einzelkomponenten der Streugutmischung das Untersuchen der Existenz einer Streuinkompatibilität umfassen, nach welcher einzelne oder sämtliche zueinander inkompatible Einzelkomponenten der Streugutmischung mit der landwirtschaftlichen Streumaschine nicht derart gemeinsam ausbringbar sind, dass deren Querverteilungen innerhalb eines Toleranzbereichs liegen. Bei der gemeinsamen Ausbringung zueinander inkompatibler Einzelkomponenten ergibt sich somit beispielsweise eine nicht-tolerierbare Ungleichmäßigkeit zumindest einer Einzelkomponente auf der landwirtschaftlichen Nutzfläche.

Das erfindungsgemäße Verfahren wird ferner dadurch vorteilhaft weitergebildet, dass das Ausgeben des Ergebnisses der Bewertung der gemeinsamen Ausbringbarkeit der Einzelkomponenten der Streugutmischung das Ausgeben der miteinander kompatiblen Einzelkomponenten der Streugutmischung und/oder das Ausgeben der zueinander inkompatiblen Einzelkomponenten der Streugutmischung umfasst. Durch die Ausgabe wird der die Ausbringung der Streugutmischung planende Benutzer über die Kompatibilität bzw. die Inkompatibilität der Einzelkomponenten der Streugutmischung informiert. Dem Benutzer kann ferner eine Eingabemöglichkeit über ein elektronisches Gerät bereitgestellt werden, mittels welcher zumindest eine der zueinander inkompatiblen Einzelkomponenten priorisierbar ist. Alternativ kann eine selbsttätige Priorisierung zumindest einer der zueinander inkompatiblen Einzelkomponenten durch die Berechnungseinrichtung erfolgen. Die selbsttätige Priorisierung erfolgt insbesondere anhand der Flüchtigkeit der zueinander inkompatiblen Einzelkomponenten der Streugutmischung.

Ferner kann das erfindungsgemäße Verfahren das Untersuchen der Existenz von einem oder mehreren Prioritäts-Einstellparametern umfassen, bei deren Einstellung an der landwirtschaftlichen Streumaschine die Querverteilung der zumindest einen priorisierten Einzelkomponente der zueinander inkompatiblen Einzelkomponenten der Streugutmischung innerhalb eines Toleranzbereichs liegt. Somit kann sich der die Ausbringung der Streugutmischung planende Benutzer in Kenntnis der Inkompatibilität der Einzelkomponenten der Streugutmischung trotz der Tatsache, dass zumindest eine nicht-priorisierte Einzelkomponente unplanmäßig, insbesondere ungleichmäßig, ausgebracht wird, für die Ausbringung der Streugutmischung entscheiden. Vorzugsweise wird der eine oder werden die mehreren Prioritäts-Einstellparameter derart ermittelt, dass die Ungleichmäßigkeiten in der Verteilung der zumindest einen nicht-priorisierten Einzelkomponente nachträglich durch eine zusätzliche Ausbringung ausgeglichen werden können. Der eine oder die mehreren Prioritäts-Einstellparameter können einen Prioritäts-Abwurfwinkel, einen Prioritäts-Einstellwert für den Aufgabepunkt der Streugutmischung auf die Streuscheibe, eine Prioritäts-Wurfweite und/oder eine Prioritäts-Streuscheibendrehzahl betreffen. Ferner kann der eine oder können die mehreren Prioritäts-Einstellparameter eine Prioritäts-Öffnungsgröße, -Öffnungsform und/oder - Öffnungsposition einer Streugut-Zuführöffnung der landwirtschaftlichen Streumaschine betreffen. Darüber hinaus kann der eine oder können die mehreren Prioritäts-Einstellparameter eine Prioritäts-Schaufelposition, -Schaufelneigung, -Schaufelausrichtung und/oder -Schaufellänge einer oder mehrerer Wurfschaufeln der Streuscheibe der landwirtschaftlichen Streumaschine betreffen, wenn die Ausbringung der Streugutmischung über Streuscheiben mit Wurfschaufeln erfolgen soll. Darüber hinaus kann der eine oder können die mehreren Prioritäts-Einstellparameter eine Prioritäts-Rutschenneigung, -Rutschenausrichtung und/oder -Rutschenposition betreffen, wenn zur Ausbringung des Streuguts das Streugut über eine Zuführrutsche des landwirtschaftlichen Streugeräts geleitet werden soll. Ferner kann der eine oder können die mehreren Prioritäts-Einstellparameter einen Prioritäts-Streuscheibentyp und/oder eine Prioritäts-Streuscheibengeometrie und/oder einen Prioritäts-Wurfschaufeltyp betreffen.

In einer weiteren bevorzugten Ausführungsform des erfindungsgemäßen Verfahrens umfasst das Ausgeben des Ergebnisses der Bewertung der gemeinsamen Ausbringbarkeit der Einzelkomponenten der Streugutmischung das Ausgeben des einen oder der mehreren Prioritäts-Einstellparameter als Einstellempfehlungen für die landwirtschaftliche Streumaschine. Die ausgegebenen Prioritäts-Einstellparameter können dann durch den die Streugutausbringung planenden Benutzer an der landwirtschaftlichen Streumaschine eingestellt werden. Alternativ können die Prioritäts-Einstellparameter auch selbsttätig von der landwirtschaftlichen Streumaschine eingestellt werden.

In einer weiteren Ausführungsform des erfindungsgemäßen Verfahrens erfolgt ein Ermitteln von komponentenbezogenen Streu- und/oder Flugeigenschaften für mehrere oder sämtliche Einzelkomponenten der Streugutmischung. Das Ermitteln der komponentenbezogenen Einstellparameter für die landwirtschaftliche Streumaschine für den geplanten Streuvorgang erfolgt vorzugsweise auf Grundlage der ermittelten komponentenbezogenen Streu- und/oder Flugeigenschaften. Die komponentenbezogenen Streu- und/oder Flugeigenschaften können die Korngröße, die Schüttdichte, die Materialdichte, die Sorte und/oder die Oberflächenbeschaffenheit, insbesondere die Oberflächenrauigkeit, der jeweiligen Einzelkomponenten der Streugutmischung betreffen. Alternativ oder zusätzlich können die komponentenbezogenen Streu- und/oder Flugeigenschaften einen oder mehrere Wurfweitenkennwerte und/oder einen oder mehrere Abwurfwinkelkennwerte der jeweiligen Einzelkomponenten der Streugutmischung betreffen. Der eine oder die mehreren Wurfweitenkennwerte und/oder der eine oder die mehreren Abwurfwinkelkennwerte sind vorzugsweise jeweils Kennwerte, welche sich auf eine Normausbringung der jeweiligen Einzelkomponenten mit einer Normstreuscheibe bei einer Normdrehzahl beziehen. Der eine oder die mehreren Wurfweitenkennwerte und/oder der eine oder die mehreren Abwurfwinkelkennwerte können auch Kennwerte sein, welche sich auf eine Normausbringung der jeweiligen Einzelkomponenten mit normierten Schaufeleinstellungen und/oder einer normierten Streugutzuführung beziehen.

In einer Weiterbildung des erfindungsgemäßen Verfahrens werden komponentenbezogene Stoffeigenschaften von mehreren oder sämtlichen Einzelkomponenten der Streugutmischung ermittelt. Das Ermitteln der komponentenbezogenen Streu- und/oder Flugeigenschaften erfolgt vorzugsweise auf Grundlage der ermittelten komponentenbezogenen Stoffeigenschaften. Die komponentenbezogenen Stoffeigenschaften können die Korngröße, die Schüttdichte, die Materialdichte, die Sorte und/oder die Oberflächenbeschaffenheit, insbesondere die Oberflächenrauigkeit, der jeweiligen Einzelkomponenten der Streugutmischung betreffen.

In einer Weiterbildung des erfindungsgemäßen Verfahrens erfolgt ein Ermitteln einer Alternativkonfiguration der landwirtschaftlichen Streumaschine, mittels welcher mehrere oder sämtliche Einzelkomponenten der Streugutmischung derart ausbringbar sind, dass deren Querverteilungen innerhalb eines Toleranzbereichs liegen, welcher enger ist als der Bereich, in welchem die Querverteilungen der Einzelkomponenten der geplanten Konfiguration der landwirtschaftlichen Streumaschine liegen. Die Alternativkonfiguration der landwirtschaftlichen Streumaschine kann beispielsweise die Streugutausbringung mit einer alternativen Streuscheibe oder einer alternativen Streuscheibenkonfiguration betreffen.

Darüber hinaus ist ein erfindungsgemäßes Verfahren vorteilhaft, bei welchem das Ausgeben des Ergebnisses der Bewertung der gemeinsamen Ausbringbarkeit der Einzelkomponenten der Streugutmischung das Ausgeben der ermittelten Alternativkonfiguration der landwirtschaftlichen Streumaschine als Konfigurationsempfehlung für die landwirtschaftliche Streumaschine umfasst. Durch das Ausgeben der ermittelten Alternativkonfiguration wird der den Streuvorgang planende Benutzer über die Möglichkeit der Verbesserung des Ausbringergebnisses durch eine entsprechende Änderung der Konfiguration in Kenntnis gesetzt. Der Benutzer kann dann die Alternativkonfiguration an der landwirtschaftlichen Streumaschine vornehmen, also beispielsweise eine alternative Streuscheibe montieren oder die Konfiguration der montierten Streuscheibe ändern.

Nachfolgend wird eine bevorzugte Ausführungsform der Erfindung unter Bezugnahme auf die beiliegende Zeichnung näher erläutert und beschrieben. Dabei zeigt:

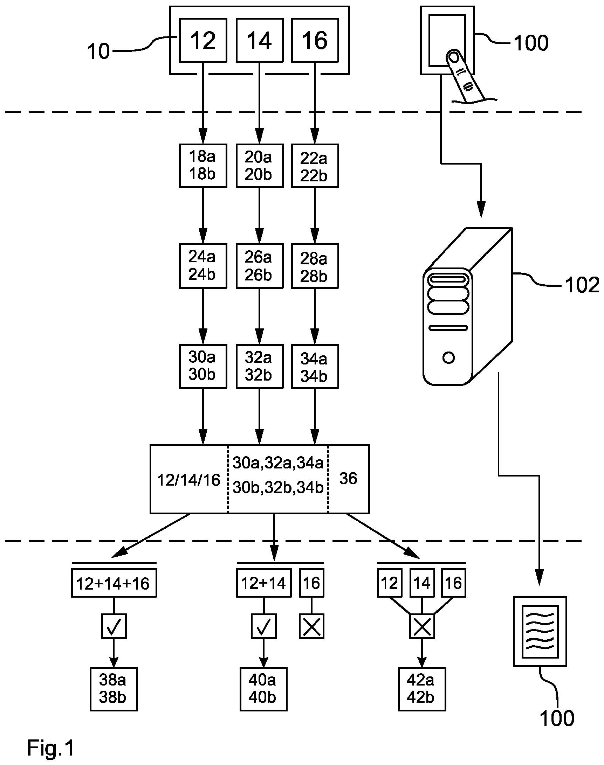

- Fig. 1: ein Ausführungsbeispiel des erfindungsgemäßen Verfahrens in einer schematischen Darstellung.

Die Fig. 1 zeigt ein System aus einem elektronischen Gerät 100 und einer Berechnungseinrichtung 102, mittels welchem ein Verfahren zum Planen der Ausbringung einer Streugutmischung 10 mit einer landwirtschaftlichen Streumaschine ausführbar ist.

Das elektronische Gerät 100 ist als mobiles Endgerät ausgebildet und kann beispielsweise ein Smartphone oder ein Tablet sein. Über eine als Touchscreen ausgebildete Eingabe- und Ausgabeeinrichtung des elektronischen Geräts 100 wird einem Benutzer eine Eingabemöglichkeit bereitgestellt, mittels welcher die Einzelkomponenten 12-16 der Streugutmischung 10 und das Mischungsverhältnis der Einzelkomponenten 12-16 der Streugutmischung 10 manuell durch den Benutzer definierbar ist. Die Streugutmischung 10 ist in diesem Fall eine Düngermischung und die Einzelkomponenten 12-16 sind unterschiedliche Einzeldünger.

Alternativ zu der manuellen Eingabe durch einen Benutzer kann die Definition der Einzelkomponenten 12-16 und deren Mischungsverhältnis auch über ein Einlesen eines oder mehrerer maschinenlesbarer Codes, wie etwa QR-Codes, durch das elektrische Gerät 100 erfolgen. Ferner kann die Definition der Einzelkomponenten 12-16 und deren Mischungsverhältnis auch über eine oder mehrere Funknachrichten erfolgen, welche an das elektronische Gerät 100 gesendet werden.

Nachdem die Einzelkomponenten 12-16 der Streugutmischung 10 und deren Mischungsverhältnis über das elektronische Gerät 100 definiert wurden, werden diese Informationen von dem elektronischen Gerät 100 an die Berechnungseinrichtung 102 versendet. Die Berechnungseinrichtung 102 ist eine Datenverarbeitungseinrichtung und ist in dem vorliegenden Ausführungsbeispiel Bestandteil eines Zentralcomputers, welcher von einem Hersteller von landwirtschaftlichen Streumaschinen betrieben wird. In alternativen Ausführungsformen kann die Berechnungseinrichtung 102 auch Bestandteil des elektronischen Geräts 100 sein, sodass keine geräteexterne Übertragung der bereitgestellten Informationen zu der Streugutmischung 10 notwendig ist.

Die Berechnungseinrichtung 102 erfasst auf Grundlage der bereitgestellten Informationen die Einzelkomponenten 12-16 der Streugutmischung 10 sowie deren Mischungsverhältnis.

Die Berechnungseinrichtung 102 ermittelt durch eine Datenbankabfrage von einer Streudatenbank komponentenbezogene Stoffeigenschaften 18a, 18b, 20a, 20b, 22a, 22b der Einzelkomponenten 12-16 der Streugutmischung 10. Die Stoffeigenschaften 18a, 18b, 20a, 20b, 22a, 22b der Einzelkomponenten 12-16 der Streugutmischung 10 können beispielsweise die Korngröße, die Schüttdichte, die Sorte und/oder die Oberflächenbeschaffenheit der Einzelkomponenten 12-16 der Streugutmischung 10 betreffen.

Auf Grundlage der ermittelten komponentenbezogenen Stoffeigenschaften 18a, 18b, 20a, 20b, 22a, 22b ermittelt die Berechnungseinrichtung 102 dann komponentenbezogene Streu- und/oder Flugeigenschaften 24a, 24b, 26a, 26b, 28a, 28b der Einzelkomponenten 12-16 der Streugutmischung 10. Alternativ können die Streu- und/oder Flugeigenschaften 24a, 24b, 26a, 26b, 28a, 28b der Einzelkomponenten 12-16 der Streugutmischung 10 durch eine Datenbankabfrage von einer Streudatenbank abgerufen werden. Die komponentenbezogenen Streu- und/oder Flugeigenschaften 24a, 24b, 26a, 26b, 28a, 28b können beispielsweise Wurfweitenkennwerte und/oder Abwurfwinkelkennwerte der jeweiligen Einzelkomponenten 12-16 der Streugutmischung 10 betreffen.

Auf Grundlage der ermittelten komponentenbezogenen Streu- und/oder Flugeigenschaften 24a, 24b, 26a, 26b, 28a, 28b der Einzelkomponenten 12-16 der Streugutmischung 10 ermittelt die Berechnungseinrichtung 102 dann komponentenbezogene Einstellparameter 30a, 30b, 32a, 32b, 34a, 34b für die landwirtschaftliche Streumaschine für den geplanten Streuvorgang für sämtliche Einzelkomponenten 12-16 der Streugutmischung 10. Die komponentenbezogenen Einstellparameter 30a, 30b, 32a, 32b, 34a, 34b umfassen vorliegend komponentenbezogene Abwurfwinkel 30a, 32a, 34a und komponentenbezogene Wurfweiten 30b, 32b, 34b der Einzelkomponenten 12-16 der Streugutmischung 10. In alternativen Ausführungsformen können die komponentenbezogenen Einstellparameter 30a, 30b, 32a, 32b, 34a, 34b auch andere Parameter betreffen. Alternativ können die komponentenbezogenen Einstellparameter 30a, 30b, 32a, 32b, 34a, 34b der Einzelkomponenten 12-16 der Streugutmischung 10 durch eine Datenbankabfrage von einer Streudatenbank abgerufen werden.

Unter Berücksichtigung der einzuhaltenden Arbeitsbreite 36 des geplanten Streuvorgangs bewertet die Berechnungseinrichtung 102 dann auf Grundlage der ermittelten komponentenbezogenen Einstellparameter 30a, 30b, 32a, 32b, 34a, 34b und dem Mischungsverhältnis Einzelkomponenten 12-16 der Streugutmischung 10 die gemeinsame Ausbringbarkeit der Einzelkomponenten 12-16 der Streugutmischung 10. Das Bewerten der gemeinsamen Ausbringbarkeit der Einzelkomponenten 12-16 der Streugutmischung 10 umfasst das Ermitteln von komponentenbezogenen Querverteilungen für die Einzelkomponenten 12-16 der Streugutmischung 10 unter Annahme unterschiedlicher Einstellparameter innerhalb des Spektrums der ermittelten komponentenbezogenen Einstellparameter 30a, 30b, 32a, 32b, 34a, 34b der Einzelkomponenten 12-16 der Streugutmischung 10.

Auf Basis der komponentenbezogenen Querverteilungen für die Einzelkomponenten 12-16 der Streugutmischung 10 untersucht die Berechnungseinrichtung 102 dann die Existenz einer Streukompatibilität und die Existenz einer Streuinkompatibilität. Bei Vorliegen einer Streukompatibilität sind einzelne oder sämtliche miteinander kompatible Einzelkomponenten 12-16 der Streugutmischung 10 mit der landwirtschaftlichen Streumaschine derart gemeinsam ausbringbar, dass deren Querverteilungen innerhalb eines Toleranzbereichs liegen. Bei Vorliegen einer Streuinkompatibilität sind einzelne oder sämtliche zueinander inkompatible Einzelkomponenten 12-16 der Streugutmischung 10 mit der landwirtschaftlichen Streumaschine nicht derart gemeinsam ausbringbar, dass deren Querverteilungen innerhalb eines Toleranzbereichs liegen.

Die Fig. 1 zeigt in diesem Zusammenhang drei unterschiedliche Möglichkeiten.

Gemäß der ersten Möglichkeit sind die Einzelkomponenten 12-16 der Streugutmischung 10 kompatibel miteinander und lassen sind derart mit der landwirtschaftlichen Streumaschine ausbringen, dass deren Querverteilungen innerhalb eines Toleranzbereichs liegen. Das Bewerten der gemeinsamen Ausbringbarkeit der Einzelkomponenten 12-16 der Streugutmischung 10 umfasst bei dieser ersten Möglichkeit das Ermitteln von Kompromiss-Einstellparametern 38a, 38b, bei deren Einstellung an der landwirtschaftlichen Streumaschine die Querverteilungen der Einzelkomponenten 12-16 der Streugutmischung 10 innerhalb des Toleranzbereichs liegen. Die Kompromiss-Einstellparameter 38a, 38b umfassen in diesem Ausführungsbeispiel einen Kompromiss-Einstellwert 38a für den Aufgabepunkt der Streugutmischung 10 auf die Streuscheibe und eine Kompromiss-Streuscheibendrehzahl 38b. In anderen Ausführungsformen können die Kompromiss-Einstellparameter 38a, 38b auch andere Parameter sein. Nachdem die Bewertung der gemeinsamen Ausbringbarkeit der Einzelkomponenten 12-16 der Streugutmischung 10 abgeschlossen ist, wird dem elektronischen Gerät 100 das Ergebnisses der Bewertung übermittelt, sodass das elektronische Gerät 100 das Ergebnis der Bewertung der gemeinsamen Ausbringbarkeit der Einzelkomponenten 12-16 der Streugutmischung 10 ausgeben kann. Das Ausgeben des Ergebnisses umfasst bei dieser ersten Möglichkeit das Ausgeben der miteinander kompatiblen Einzelkomponenten 12-16 der Streugutmischung 10 und das Ausgeben der Kompromiss-Einstellparameter 38a, 38b als Einstellempfehlungen für die landwirtschaftliche Streumaschine.

Gemäß der zweiten Möglichkeit sind die Einzelkomponenten 12, 14 der Streugutmischung 10 kompatibel miteinander und lassen sind derart mit der landwirtschaftlichen Streumaschine ausbringen, dass deren Querverteilungen innerhalb eines Toleranzbereichs liegen. Gleichzeitig sind die Einzelkomponenten 12, 14 der Streugutmischung 10 inkompatibel zu der Einzelkomponente 16 Streugutmischung 10, sodass sich die Einzelkomponenten 12, 14 einerseits und die Einzelkomponente 16 andererseits nicht derart mit der landwirtschaftlichen Streumaschine ausbringen lassen, dass deren Querverteilungen innerhalb eines Toleranzbereichs liegen. Das Bewerten der gemeinsamen Ausbringbarkeit der Einzelkomponenten 12-16 der Streugutmischung 10 umfasst bei dieser zweiten Möglichkeit das Ermitteln von Kompromiss-Einstellparametern 40a, 40b, bei deren Einstellung an der landwirtschaftlichen Streumaschine die Querverteilungen der Einzelkomponenten 12, 14 der Streugutmischung 10 innerhalb des Toleranzbereichs liegen. Die Kompromiss-Einstellparameter 40a, 40b umfassen in diesem Ausführungsbeispiel einen Kompromiss-Einstellwert 40a für den Aufgabepunkt der Streugutmischung 10 auf die Streuscheibe und eine Kompromiss-Streuscheibendrehzahl 40b. In anderen Ausführungsformen können die Kompromiss-Einstellparameter 40a, 40b auch andere Parameter sein. Nachdem die Bewertung der gemeinsamen Ausbringbarkeit der Einzelkomponenten 12-16 der Streugutmischung 10 abgeschlossen ist, wird dem elektronischen Gerät 100 das Ergebnisses der Bewertung übermittelt, sodass das elektronische Gerät 100 das Ergebnis der Bewertung der gemeinsamen Ausbringbarkeit der Einzelkomponenten 12-16 der Streugutmischung 10 ausgeben kann. Das Ausgeben des Ergebnisses umfasst bei dieser zweiten Möglichkeit das Ausgeben der miteinander kompatiblen Einzelkomponenten 12, 14 der Streugutmischung 10 und der zu diesen Einzelkomponenten 12, 14 inkompatiblen Einzelkomponente 16. Ferner umfasst das Ausgeben des Ergebnisses das Ausgeben der Kompromiss-Einstellparameter 40a, 40b als Einstellempfehlungen für die landwirtschaftliche Streumaschine.

Gemäß der dritten Möglichkeit sind die Einzelkomponenten 12-16 der Streugutmischung 10 in Gänze inkompatibel zueinander und lassen sind nicht derart mit der landwirtschaftlichen Streumaschine ausbringen, dass deren Querverteilungen innerhalb eines Toleranzbereichs liegen. Nachdem die Bewertung der gemeinsamen Ausbringbarkeit der Einzelkomponenten 12-16 der Streugutmischung 10 abgeschlossen ist, wird dem elektronischen Gerät 100 das Ergebnisses der Bewertung übermittelt, sodass das elektronische Gerät 100 das Ergebnis der Bewertung der gemeinsamen Ausbringbarkeit der Einzelkomponenten 12-16 der Streugutmischung 10 ausgeben kann. Das Ausgeben des Ergebnisses umfasst bei dieser dritten Möglichkeit das Ausgeben der zueinander inkompatiblen Einzelkomponenten 12-16 der Streugutmischung 10. Über das elektronische Gerät 100 kann dem Benutzer jedoch eine Eingabemöglichkeit bereitgestellt werden, mittels welcher zumindest eine der zueinander inkompatiblen Einzelkomponenten 12-16 priorisierbar ist. Alternativ kann eine selbsttätige Priorisierung zumindest einer Einzelkomponente 12-16 durch die Berechnungseinrichtung 102 erfolgen, insbesondere anhand der Flüchtigkeit der zueinander inkompatiblen Einzelkomponenten 12-16. Nachdem eine Einzelkomponente 12-16 priorisiert wurde, können dann Prioritäts-Einstellparameter 42a, 42b ermittelt werden, bei deren Einstellung an der landwirtschaftlichen Streumaschine die Querverteilung der zumindest einen priorisierten Einzelkomponente 12-16 der zueinander inkompatiblen Einzelkomponenten 12-16 der Streugutmischung 10 innerhalb eines Toleranzbereichs liegt, wobei die Ungleichmäßigkeiten in der Verteilung der nicht-priorisierten Einzelkomponenten 12-16 nachträglich durch eine separate Streugutausbringung ausgeglichen werden kann. Die Prioritäts-Einstellparameter 42a, 42b umfassen einen Prioritäts-Einstellwert 42a für den Aufgabepunkt der Streugutmischung 10 auf die Streuscheibe und eine Prioritäts-Streuscheibendrehzahl 42b. In anderen Ausführungsformen können die Prioritäts-Einstellparameter 42a, 42b auch andere Parameter sein.

Ferner kann die Berechnungseinrichtung 102 auch eine Alternativkonfiguration der landwirtschaftlichen Streumaschine ermitteln, mittels welcher mehrere oder sämtliche Einzelkomponenten 12-16 der Streugutmischung 10 derart ausbringbar sind, dass deren Querverteilungen innerhalb eines Toleranzbereichs liegen, welcher enger ist als der Bereich, in welchem die Querverteilungen der Einzelkomponenten 12-16 mit der geplanten Konfiguration der landwirtschaftlichen Streumaschine liegen. Die Alternativkonfiguration der landwirtschaftlichen Streumaschine kann beispielsweise die Streugutausbringung mit einer alternativen Streuscheibe betreffen. Wenn die Ermittlung einer Alternativkonfiguration der landwirtschaftlichen Streumaschine erfolgt, umfasst das Ausgeben des Ergebnisses der Bewertung der gemeinsamen Ausbringbarkeit der Einzelkomponenten 12-16 der Streugutmischung 10 das Ausgeben der ermittelten Alternativkonfiguration der landwirtschaftlichen Streumaschine als Konfigurationsempfehlung für die landwirtschaftliche Streumaschine.

Die Ausführung der durch die Berechnungseinrichtung 102 ausgeführten Verfahrensschritte und/oder die Ausführung der durch das elektronische Gerät 100 ausgeführten Verfahrensschritte erfolgt dabei computerimplementiert.

### Bezugszeichen

- 10: Streugutmischung
- 12-16: Einzelkomponenten
- 18a, 18b: Stoffeigenschaften
- 20a, 20b: Stoffeigenschaften
- 22a, 22b: Stoffeigenschaften
- 24a, 24b: Streu- und/oder Flugeigenschaften
- 26a, 26b: Streu- und/oder Flugeigenschaften
- 28a, 28b: Streu- und/oder Flugeigenschaften
- 30a, 30b: Einstellparameter
- 32a, 32b: Einstellparameter
- 34a, 34b: Einstellparameter
- 36: Arbeitsbreite
- 38a, 38b: Kompromiss-Einstellparameter
- 40a, 40b: Kompromiss-Einstellparameter
- 42a, 42b: Prioritäts-Einstellparameter

- 100: elektronisches Gerät
- 102: Berechnungseinrichtung

## Patentansprüche

1. Verfahren zum Planen der Ausbringung einer Streugutmischung (10) mit einer landwirtschaftlichen Streumaschine, mit dem Schritt:
- Erfassen der Einzelkomponenten (12-16) der Streugutmischung (10); **gekennzeichnet durch** die Schritte:
- Ermitteln von komponentenbezogenen Einstellparametern (30a, 30b, 32a, 32b, 34a, 34b) für die landwirtschaftliche Streumaschine für einen geplanten Streuvorgang für mehrere oder sämtliche Einzelkomponenten (12-16) der Streugutmischung (10); und
- Bewerten der gemeinsamen Ausbringbarkeit der Einzelkomponenten (12-16) der Streugutmischung (10) auf Grundlage der ermittelten komponentenbezogenen Einstellparameter (30a, 30b, 32a, 32b, 34a, 34b) **durch** eine Berechnungseinrichtung (102),
**dadurch** gekennzeichnet,
dass das Bewerten der gemeinsamen Ausbringbarkeit der Einzelkomponenten (12-16) der Streugutmischung (10) den folgenden Schritt umfasst:
- Untersuchen der Existenz von einem oder mehreren Kompromiss- Einstellparametern (38a, 38b, 40a, 40b), bei deren Einstellung an der landwirtschaftlichen Streumaschine die Querverteilungen mehrerer oder sämtlicher Einzelkomponenten (12-16) der Streugutmischung (10) innerhalb eines Toleranzbereichs liegen, und
dass ein Ausgeben eines Ergebnisses der Bewertung der gemeinsamen Ausbringbarkeit der Einzelkomponenten (12- 16) der Streugutmischung (10) den folgenden Schritt aufweist:
- Ausgeben des einen oder mehreren Kompromiss-Einstellparameter (38a, 38b, 40a, 40b) als Einstellempfehlungen für die landwirtschaftliche Streumaschine.

2. Verfahren nach Anspruch 1,
**gekennzeichnet durch** den Schritt:
- Ausgeben eines Ergebnisses der Bewertung der gemeinsamen Ausbringbarkeit der Einzelkomponenten (12-16) der Streugutmischung (10) über ein elektronisches Gerät (100).

3. Verfahren nach Anspruch 1 oder 2,
**gekennzeichnet durch** den Schritt:
- Bereitstellen einer Möglichkeit für einen Benutzer über ein elektronisches Gerät (100), mittels welcher die Einzelkomponenten (12-16) und vorzugsweise das Mischungsverhältnis der Einzelkomponenten (12-16) definierbar ist,
wobei das Ausgeben des Ergebnisses der Bewertung der gemeinsamen Ausbringbarkeit der Einzelkomponenten (12-16) der Streugutmischung (10) vorzugsweise über das die Eingabemöglichkeit bereitstellende elektronische Gerät (100) erfolgt.

4. Verfahren nach einem der vorstehenden Ansprüche, **dadurch gekennzeichnet, dass** das Erfassen der Einzelkomponenten (12- 16) der Streugutmischung (10) und/oder das Ermitteln der komponentenbezogenen Einstellparameter (30a, 30b, 32a, 32b, 34a, 34b) durch die Berechnungseinrichtung (102) erfolgt.

5. Verfahren nach einem der vorstehenden Ansprüche,
**dadurch gekennzeichnet, dass** das Bewerten der gemeinsamen Ausbringbarkeit der Einzelkomponenten (12-16) der Streugutmischung (10) zumindest einen der folgenden Schritte umfasst:
- Ermitteln von komponentenbezogenen Querverteilungen für mehrere oder sämtliche Einzelkomponenten (12-16) der Streugutmischung (10) unter Annahme der jeweiligen komponentenbezogenen Einstellparameter (30a, 30b, 32a, 32b, 34a, 34b);
- Ermitteln von komponentenbezogenen Querverteilungen für mehrere oder sämtliche Einzelkomponenten (12-16) der Streugutmischung (10) unter Annahme unterschiedlicher Einstellparameter innerhalb des Spektrums der ermittelten komponentenbezogenen Einstellparameter (30a, 30b, 32a, 32b, 34a, 34b) der Einzelkomponenten (12-16) der Streugutmischung (10).

6. Verfahren nach einem der vorstehenden Ansprüche,
**dadurch gekennzeichnet, dass** das Bewerten der gemeinsamen Ausbringbarkeit der Einzelkomponenten (12-16) der Streugutmischung (10) zumindest einen der folgenden Schritte umfasst:
- Untersuchen der Existenz einer Streukompatibilität, nach welcher einzelne oder sämtliche miteinander kompatible Einzelkomponenten (12-16) der Streugutmischung (10) mit der landwirtschaftlichen Streumaschine derart gemeinsam ausbringbar sind, dass deren Querverteilungen innerhalb eines Toleranzbereichs liegen;
- Untersuchen der Existenz einer Streuinkompatibilität, nach welcher einzelne oder sämtliche zueinander inkompatible Einzelkomponenten (12-16) der Streugutmischung (10) mit der landwirtschaftlichen Streumaschine nicht derart gemeinsam ausbringbar sind, dass deren Querverteilungen innerhalb eines Toleranzbereichs liegen.

7. Verfahren nach Anspruch 6,
**dadurch gekennzeichnet, dass** das Ausgeben des Ergebnisses der Bewertung der gemeinsamen Ausbringbarkeit der Einzelkomponenten (12- 16) der Streugutmischung (10) zumindest einen der folgenden Schritte aufweist:
- Ausgeben der miteinander kompatiblen Einzelkomponenten (12-16) der Streugutmischung (10);
- Ausgeben der zueinander inkompatiblen Einzelkomponenten (12-16) der Streugutmischung (10).

8. Verfahren nach einem der vorstehenden Ansprüche,
**gekennzeichnet durch** den Schritt:
- Ermitteln von komponentenbezogenen Streu- und/oder Flugeigenschaften (24a, 24b, 26a, 26b, 28a, 28b) für mehrere oder sämtliche Einzelkomponenten (12-16) der Streugutmischung (10);
wobei das Ermitteln der komponentenbezogenen Einstellparameter (30a, 30b, 32a, 32b, 34a, 34b) für die landwirtschaftliche Streumaschine für den geplanten Streuvorgang vorzugsweise auf Grundlage der ermittelten komponentenbezogenen Streu- und/oder Flugeigenschaften (24a, 24b, 26a, 26b, 28a, 28b) erfolgt.

9. Verfahren nach Anspruch 8,
**gekennzeichnet durch** den Schritt:
- Ermitteln von komponentenbezogenen Stoffeigenschaften (18a, 18b, 20a, 20b, 22a, 22b) von mehreren oder sämtlichen Einzelkomponenten (12-16) der Streugutmischung (10);
wobei das Ermitteln der komponentenbezogenen Streu- und/oder Flugeigenschaften (24a, 24b, 26a, 26b, 28a, 28b) vorzugsweise auf Grundlage der ermittelten komponentenbezogenen Stoffeigenschaften (18a, 18b, 20a, 20b, 22a, 22b) erfolgt.

10. Verfahren nach einem der vorstehenden Ansprüche,
**gekennzeichnet durch** den Schritt:
- Ermitteln einer Alternativkonfiguration der landwirtschaftlichen Streumaschine, mittels welcher mehrere oder sämtliche Einzelkomponenten (12-16) der Streugutmischung (10) derart ausbringbar sind, dass deren Querverteilungen innerhalb eines Toleranzbereichs liegen, welcher enger ist als der Bereich, in welchem die Querverteilungen der Einzelkomponenten (12-16) mit der geplanten Konfiguration der landwirtschaftlichen Streumaschine liegen.

11. Verfahren nach Anspruch 10,
**dadurch gekennzeichnet, dass** das Ausgeben des Ergebnisses der Bewertung der gemeinsamen Ausbringbarkeit der Einzelkomponenten (12- 16) der Streugutmischung (10) den folgenden Schritt aufweist:
- Ausgeben der ermittelten Alternativkonfiguration der landwirtschaftlichen Streumaschine als Konfigurationsempfehlung für die landwirtschaftliche Streumaschine.

## Claims

1. Method for planning the application of a spreadable material mixture (10) using an agricultural spreader, comprising the step of:
- detecting the individual components (12-16) of the spreadable material mixture (10); **characterized by** the steps of:
- determining component-related setting parameters (30a, 30b, 32a, 32b, 34a, 34b) for the agricultural spreader for a planned spreading process for a plurality of or all individual components (12-16) of the spreadable material mixture (10); and
- evaluating the common applicability of the individual components (12-16) of the spreadable material mixture (10) on the basis of the determined component-related setting parameters (30a, 30b, 32a, 32b, 34a, 34b) by a calculating means (102),
**characterized in that**
evaluating the common applicability of the individual components (12-16) of the spreadable material mixture (10) comprises the following step:
- investigating the existence of one or more compromise setting parameters (38a, 38b, 40a, 40b), the setting of which on the agricultural spreader causes the lateral distributions of a plurality of or all individual components (12-16) of the spreadable material mixture (10) to lie within a tolerance range, and
**in that** outputting a result of the evaluation of the common applicability of the individual components (12-16) of the spreadable material mixture (10) has the following step:
- outputting the one or more compromise setting parameters (38a, 38b, 40a, 40b) as setting recommendations for the agricultural spreader.

2. Method according to claim 1,
**characterized by** the step of:
- outputting a result of the evaluation of the common applicability of the individual components (12-16) of the spreadable material mixture (10) via an electronic device (100).

3. Method according to either claim 1 or claim 2,
**characterized by** the step of:
- providing an option for a user via an electronic device (100), by means of which the individual components (12-16) and preferably the mixing ratio of the individual components (12-16) can be defined,
the result of the evaluation of the common applicability of the individual components (12-16) of the spreadable material mixture (10) preferably being output via the electronic device (100) providing the input option.

4. Method according to any of the preceding claims, **characterized in that** detecting the individual components (12-16) of the spreadable material mixture (10) and/or determining the component-related setting parameters (30a, 30b, 32a, 32b, 34a, 34b) is carried out by the calculating means (102).

5. Method according to any of the preceding claims,
**characterized in that** evaluating the common applicability of the individual components (12-16) of the spreadable material mixture (10) comprises at least one of the following steps:
- determining component-related lateral distributions for a plurality of or all individual components (12-16) of the spreadable material mixture (10) assuming the respective component-related setting parameters (30a, 30b, 32a, 32b, 34a, 34b);
- determining component-related lateral distributions for a plurality of or all individual components (12-16) of the spreadable material mixture (10) assuming different setting parameters within the spectrum of the determined component-related setting parameters (30a, 30b, 32a, 32b, 34a, 34b) of the individual components (12-16) of the spreadable material mixture (10).

6. Method according to any of the preceding claims,
**characterized in that** evaluating the common applicability of the individual components (12-16) of the spreadable material mixture (10) comprises at least one of the following steps:
- investigating the existence of a spreading compatibility, according to which individual or all mutually compatible individual components (12-16) of the spreadable material mixture (10) can be jointly applied using the agricultural spreader in such a way that their lateral distributions lie within a tolerance range;
- investigating the existence of a spreading incompatibility, according to which individual or all mutually incompatible individual components (12-16) of the spreadable material mixture (10) cannot be jointly applied using the agricultural spreader in such a way that their lateral distributions lie within a tolerance range.

7. Method according to claim 6,
**characterized in that** outputting the result of the evaluation of the common applicability of the individual components (12-16) of the spreadable material mixture (10) comprises at least one of the following steps:
- outputting the mutually compatible individual components (12-16) of the spreadable material mixture (10);
- outputting the mutually incompatible individual components (12-16) of the spreadable material mixture (10).

8. Method according to any of the preceding claims,
**characterized by** the step of:
- determining component-related spreading and/or flight properties (24a, 24b, 26a, 26b, 28a, 28b) for a plurality of or all individual components (12-16) of the spreadable material mixture (10);
the component-related setting parameters (30a, 30b, 32a, 32b, 34a, 34b) for the agricultural spreader being determined for the planned spreading process preferably on the basis of the determined component-related spreading and/or flight properties (24a, 24b, 26a, 26b, 28a, 28b).

9. Method according to claim 8,
**characterized by** the step of:
- determining component-related material properties (18a, 18b, 20a, 20b, 22a, 22b) of a plurality of or all individual components (12-16) of the spreadable material mixture (10);
the component-related spreading and/or flight properties (24a, 24b, 26a, 26b, 28a, 28b) being determined preferably on the basis of the determined component-related material properties (18a, 18b, 20a, 20b, 22a, 22b).

10. Method according to any of the preceding claims,
**characterized by** the step of:
- determining an alternative configuration of the agricultural spreader, by means of which a plurality of or all individual components (12-16) of the spreadable material mixture (10) can be applied such that their lateral distributions lie within a tolerance range which is narrower than the range in which the lateral distributions of the individual components (12-16) lie using the planned configuration of the agricultural spreader.

11. Method according to claim 10,
**characterized in that** outputting the result of the evaluation of the common applicability of the individual components (12- 16) of the spreadable material mixture (10) comprises the following step:
- outputting the determined alternative configuration of the agricultural spreader as a configuration recommendation for the agricultural spreader.

## Revendications

1. Procédé destiné à la planification de l'épandage d'un mélange de produit d'épandage (10) avec une machine d'épandage agricole, comportant l'étape de :
- détection des composants individuels (12-16) du mélange de produit d'épandage (10) ; **caractérisé par** les étapes de :
- détermination de paramètres de réglage (30a, 30b, 32a, 32b, 34a, 34b) se rapportant aux composants pour la machine d'épandage agricole pour un processus d'épandage planifié pour plusieurs ou tous les composants individuels (12-16) du mélange de produit d'épandage (10) ; et
- évaluation de l'aptitude commune à l'épandage des composants individuels (12-16) du mélange de produit d'épandage (10) sur la base des paramètres de réglage (30a, 30b, 32a, 32b, 34a, 34b) se rapportant aux composants déterminés par un dispositif de calcul (102),
**caractérisé en ce**
**que** l'évaluation de l'aptitude commune à l'épandage des composants individuels (12-16) du mélange de produit d'épandage (10) comprend l'étape suivante :
- analyse de l'existence d'un ou de plusieurs paramètres de réglage de compromis (38a, 38b, 40a, 40b), pour le réglage desquels au niveau de la machine d'épandage agricole les répartitions transversales de plusieurs ou de tous les composants individuels (12-16) du mélange de produit d'épandage (10) se situent dans une plage de tolérance et
**en ce qu**'une émission d'un résultat de l'évaluation de l'aptitude commune à l'épandage des composants individuels (12-16) du mélange de produit d'épandage (10) présente l'étape suivante :
- émission de l'un ou des plusieurs paramètres de réglage de compromis (38a, 38b, 40a, 40b) en tant que recommandations de réglage pour la machine d'épandage agricole.

2. Procédé selon la revendication 1,
**caractérisé par** l'étape de :
- émission d'un résultat de l'évaluation de l'aptitude commune à l'épandage des composants individuels (12-16) du mélange de produit d'épandage (10) par l'intermédiaire d'un appareil électronique (100).

3. Procédé selon la revendication 1 ou 2,
**caractérisé par** l'étape de :
- fourniture d'une possibilité pour un utilisateur par l'intermédiaire d'un appareil électronique (100), à l'aide de laquelle les composants individuels (12-16) et de préférence le rapport de mélange des composants individuels (12-16) peut être défini,
l'émission du résultat de l'évaluation de l'aptitude commune à l'épandage des composants individuels (12-16) du mélange de produit d'épandage (10) étant de préférence effectuée par l'intermédiaire de l'appareil électronique (100) fournissant la possibilité d'entrée.

4. Procédé selon l'une des revendications précédentes,
**caractérisé en ce que** la détection des composants individuels (12-16) du mélange de produit d'épandage (10) et/ou la détermination des paramètres de réglage (30a, 30b, 32a, 32b, 34a, 34b) se rapportant aux composants est/sont effectuée(s) par le dispositif de calcul (102).

5. Procédé selon l'une des revendications précédentes,
**caractérisé en ce que** l'évaluation de l'aptitude commune à l'épandage des composants individuels (12-16) du mélange de produit d'épandage (10) comprend au moins l'une des étapes suivantes :
- détermination de répartitions transversales se rapportant aux composants pour plusieurs ou tous les composants individuels (12-16) du mélange de produit d'épandage (10) dans l'hypothèse des paramètres de réglage (30a, 30b, 32a, 32b, 34a, 34b) se rapportant aux composants respectifs ;
- détermination de répartitions transversales se rapportant aux composants pour plusieurs ou tous les composants individuels (12-16) du mélange de produit d'épandage (10) dans l'hypothèse de paramètres de réglage différents au sein du spectre de paramètres de réglage (30a, 30b, 32a, 32b, 34a, 34b) se rapportant aux composants déterminés des composants individuels (12-16) du mélange de produit d'épandage (10).

6. Procédé selon l'une des revendications précédentes,
**caractérisé en ce que** l'évaluation de l'aptitude commune à l'épandage des composants individuels (12-16) du mélange de produit d'épandage (10) comprend au moins l'une des étapes suivantes :
- analyse de l'existence d'une compatibilité d'épandage, selon laquelle différents ou tous les composants individuels (12-16) compatibles les uns avec les autres du mélange de produit d'épandage (10) peuvent être épandus conjointement avec la machine d'épandage agricole de telle sorte que leurs répartitions transversales se situent au sein d'une plage de tolérance ;
- analyse de l'existence d'une incompatibilité d'épandage, selon laquelle différents ou tous les composants individuels (12-16) incompatibles les uns avec les autres du mélange de produit d'épandage (10) ne peuvent pas être épandus conjointement avec la machine d'épandage agricole de telle sorte que leurs répartitions transversales se situent au sein d'une plage de tolérance.

7. Procédé selon la revendication 6,
**caractérisé en ce que** l'émission du résultat de l'évaluation de l'aptitude commune à l'épandage des composants individuels (12-16) du mélange de produit d'épandage (10) présente au moins l'une des étapes suivantes :
- émission des composants individuels (12-16) compatibles les uns avec les autres du mélange de produit d'épandage (10) ;
- émission des composants individuels (12-16) incompatibles les uns avec les autres du mélange de produit d'épandage (10).

8. Procédé selon l'une des revendications précédentes,
**caractérisé par** l'étape de :
- détermination de propriétés d'épandage et/ou en vol (24a, 24b, 26a, 26b, 28a, 28b) se rapportant aux composants pour plusieurs ou tous les composants individuels (12-16) du mélange de produit d'épandage (10) ;
la détermination des paramètres de réglage (30a, 30b, 32a, 32b, 34a, 34b) se rapportant aux composants pour la machine d'épandage agricole pour le processus d'épandage planifié étant de préférence effectuée sur la base des propriétés d'épandage et/ou en vol (24a, 24b, 26a, 26b, 28a, 28b) déterminées se rapportant aux composants.

9. Procédé selon la revendication 8,
**caractérisé par** l'étape de :
- détermination de propriétés matérielles (18a, 18b, 20a, 20b, 22a, 22b) se rapportant aux composants de plusieurs ou de tous les composants individuels (12-16) du mélange de produit d'épandage (10) ;
la détermination des propriétés d'épandage et/ou en vol (24a, 24b, 26a, 26b, 28a, 28b) se rapportant aux composants étant de préférence effectuée sur la base des propriétés matérielles (18a, 18b, 20a, 20b, 22a, 22b) déterminées se rapportant aux composants.

10. Procédé selon l'une des revendications précédentes,
**caractérisé par** l'étape de :
- détermination d'une configuration alternative de la machine d'épandage agricole, à l'aide de laquelle plusieurs ou tous les composants individuels (12-16) du mélange de produit d'épandage (10) peuvent être épandus de telle sorte que leurs répartitions transversales se situent au sein d'une plage de tolérance, qui est plus étroite que la plage dans laquelle se situent les répartitions transversales des composants individuels (12-16) avec la configuration planifiée de la machine d'épandage agricole.

11. Procédé selon la revendication 10,
**caractérisé en ce que** l'émission du résultat de l'évaluation de l'aptitude commune à l'épandage des composants individuels (12-16) du mélange de produit d'épandage (10) présente au moins l'étape suivante :
- émission de la configuration alternative déterminée de la machine d'épandage agricole en tant que recommandation de configuration pour la machine d'épandage agricole.
